# EUROPÄISCHE PATENTSCHRIFT

(11) **EP 4 356 086 B1**
(45) Veröffentlichungstag und Bekanntmachung des Hinweises auf die Patenterteilung: **09.04.2025**
(21) Anmeldenummer: 22734575.8
(22) Anmeldetag: 16.06.2022
(51) Int. Cl.: G01K 7/02, G01K 17/00, G01K 19/00

(54) **SENSOR, SENSORSYSTEM UND VERFAHREN ZUR ERFASSUNG THERMODYNAMISCHER KENNGRÖSSEN EINER PROBE SOWIE DIE VERWENDUNG DES SENSORS ODER SENSORSYSTEMS**
SENSOR, SENSOR SYSTEM AND METHOD FOR MEASURING THERMODYNAMIC PARAMETERS OF A SAMPLE, AND USE OF THE SENSOR OR SENSOR SYSTEM
CAPTEUR, SYSTÈME DE CAPTEUR ET PROCÉDÉ DE MESURE DE PARAMÈTRES THERMODYNAMIQUES D'UN ÉCHANTILLON, ET UTILISATION DU CAPTEUR OU DU SYSTÈME DE CAPTEUR

(30) Priorität: 18.06.2021 DE 102021206291; 19.11.2021 DE 102021213046
(43) Veröffentlichungstag der Anmeldung: 24.04.2024
(73) Patentinhaber: Linseis Messgeräte GmbH, 95100 Selb (DE)
(72) Erfinder: LINSEIS, Florian, 95100 Selb (DE); LINSEIS, Vincent, 95100 Selb (DE); VÖLKLEIN, Friedemann, 65527 Niedernhausen (DE)
(74) Vertreter: Pfenning, Meinig & Partner mbB
(86) Internationale Anmeldenummer: PCT/EP2022/066454
(87) Internationale Veröffentlichungsnummer: WO 2022/263587

(56) Entgegenhaltungen:
- DE-A1- 102019 206 214
- US-A1- 2015 268 182

## Beschreibung

Die Erfindung betrifft einen Sensor, ein Sensorsystem und ein Verfahren zur Erfassung thermodynamischer Kenngrößen einer Probe sowie die Verwendung des Sensors oder Sensorsystems. Ein Beispiel von einem solchen Sensor ist in DE 10 2019 206214 A1 zu finden. Dieses Dokument beschreibt ein Differentialkalorimeter bei dem auf der Oberfläche einer Trägerstruktur mindestens ein Thermoelement als Temperatursensor und mindestens ein Heizelement angeordnet sind.

Ein zentrales Problem bei der Bestimmung thermodynamischer Kenngrößen, insbesondere kleiner Proben, stellt die nur geringe Wärmeabgabe oder Wärmeaufnahme einer jeweiligen Probe im Vergleich zu dem durch die Messapparatur hervorgerufenen thermischen Rauschen dar. Die Messung kleinster Wärmemengen stellt somit hohe Anforderungen an die thermische Isolierung einer Probe. Zudem können Störungen während einer Messung, die beispielsweise durch thermodynamische Prozesse, die in der unmittelbaren Umgebung der Probe ablaufen können, oder durch einen unkontrollierten Einfluss der Messapparatur auf die Probe selbst hervorgerufen werden können, zu einer Beeinträchtigung der Messergebnisse führen.

Hochsensitive thermische Sensoren, beispielsweise Nanokalorimeter, sind daher komplex aufgebaut und nur für spezielle Anwendungen konzipiert. Zudem können Nanokalorimeter typischerweise nur in einem schmalen spektralen Bereich effizient betrieben und müssen dabei aufwendig kalibriert werden.

Aufgabe der vorliegenden Erfindung ist es daher, einen Sensor, ein Sensorsystem und ein Verfahren zur Bestimmung thermodynamischer Kenngrößen mit hoher Messgenauigkeit aber nur geringer Komplexität vorzuschlagen.

Diese Aufgabe wird mit einem Sensor gemäß Anspruch 1, einem Sensorsystem gemäß Anspruch 11, einem Verfahren gemäß Anspruch 15 und der Verwendung des Sensors oder Sensorsystems gemäß Anspruch 18 gelöst. Vorteilhafte Ausführungsformen sind in den abhängigen Ansprüchen beschrieben.

Die Erfindung betrifft einen Sensor zur Erfassung thermodynamischer Kenngrößen einer Probe. Der Sensor umfasst eine Trägerstruktur, mindestens ein Heizelement, mindestens eine Thermokette und mindestens eine elektronische Auswerte- und Steuereinheit.

Die Trägerstruktur weist mindestens ein Substrat und mindestens eine freitragende Membran auf. Die äußeren Randbereiche der mindestens einen freitragenden Membran sind auf dem mindestens einen Substrat angeordnet.

Das mindestens eine Heizelement ist mit mindestens einer elektrischen Leiterbahn, die auf einem ersten Teilbereich der ersten Oberfläche der freitragenden Membran angeordnet ist, gebildet.

Die mindestens eine Thermokette ist mit mehreren elektrisch in Reihe miteinander verbundenen Thermoelementen gebildet und umschließt die mindestens eine elektrische Leiterbahn und/oder das mindestens eine Heizelement auf der ersten Oberfläche der freitragenden Membran zumindest teilweise.

Die mindestens eine elektronische Auswerte- und Steuereinheit ist mit der Thermokette elektrisch verbunden und dazu ausgebildet, anhand einer mittels des mindestens einen Heizelements durchgeführten Kalibrierung und einer an oder auf der freitragenden Membran angeordneten Probe mindestens einen Temperaturgradienten, der sich in der freitragenden Membran aufgrund eines in der Probe ablaufenden thermodynamischen Prozesses und einer damit verbundenen Wärmeabgabe- oder Wärmeaufnahme ausgebildet hat, zu erfassen.

Durch die zumindest teilweise Anordnung des mindestens einen Heizelements, der mindestens einen Thermokette und/oder der Probe an/auf einer freitragenden Membran wird eine besonders effiziente thermische Isolierung sensitiver Komponenten der Messapparatur und der Probe erreicht. Vorzugsweise ist die Wärmeleitfähigkeit der freitragenden Membran dabei kleiner als die Wärmeleitfähigkeit des Substrats. Besonders vorzugsweise bildet das Substrat mit der freitragenden Membran eine Trägerstruktur in Form einer Nano- oder Mikrobrücke.

Der vorgeschlagene Sensor ermöglicht zudem auch eine besonders einfache und genaue Kalibrierung der mindestens einen Thermokette mittels des mindestens einen Heizelements. Dazu kann in Abwesenheit der Probe, beispielsweise mittels der mindestens einen elektronischen Auswerte- und Steuereinheit, eine Kalibrierungskurve, die einen funktionalen Zusammenhang zwischen der Heizleistung des mindestens einen Heizelements und einer an den Enden der mindestens einen Thermokette anliegenden elektrischen Spannung angeben kann, erfasst werden. Dazu kann die mindestens eine elektrische Leiterbahn des mindestens einen Heizelements im ersten Teilbereich der ersten Oberfläche der freitragenden Membran auch mäanderförmig ausgebildet bzw. angeordnet sein.

Vorzugsweise ist die elektronische Auswerte- und Steuereinheit und die mindestens eine Thermokette dazu ausgebildet, mindestens einen Temperaturgradienten, der einen zur Normalen der ersten Oberfläche der freitragenden Membran orthogonalen Vektor bildet, zu erfassen. Die parallel zur Normalen der ersten Oberfläche verlaufenden Komponenten des mindestens einen Temperaturgradienten können aufgrund der geringen Dicke der Membran von maximal 1 µm vernachlässigt werden.

Die Probe kann während der Erfassung des mindestens einen Temperaturgradienten mittels der elektronischen Auswerte- und Steuereinheit vorteilhaft an oder auf einer dem ersten Teilbereich der ersten Oberfläche gegenüberliegenden zweiten Oberfläche der freitragenden Membran angeordnet sein. Beispielsweise kann die zweite Oberfläche einen zweiten Teilbereich aufweisen, der zu dem ersten Teilbereich der ersten Oberfläche korrespondierend angeordnet sein kann. Besonders vorzugsweise ist die Probe an oder auf diesem zweiten Teilbereich der zweiten Oberfläche der freitragenden Membran angeordnet. Besonders vorzugsweise ist die Probe auf der von der mindestens einen elektrischen Leiterbahn des mindestens einen Heizelements wegweisenden zweiten Oberfläche der freitragenden Membran und dort der mindestens einen elektrischen Leiterbahn direkt gegenüberliegend angeordnet.

Vorzugsweise ist auf der mindestens einen elektrischen Leiterbahn des mindestens einen Heizelements oder auf einer Schicht, in der die mindestens eine elektrische Leiterbahn und/oder das mindestens eine Heizelement integriert ist, eine wärmeleitende Schicht angeordnet. Besonders vorzugsweise ist die der mindestens einen elektrischen Leiterbahn und/oder dem mindestens einen Heizelement zugewandte Oberfläche der wärmeleitenden Schicht zu dem ersten Teilbereich der ersten Oberfläche korrespondierend angeordnet. Insbesondere kann der äußere Rand der wärmeleitenden Schicht parallel zu dem äußeren Rand des ersten Teilbereichs der ersten Oberfläche der freitragenden Membran verlaufen.

Um den Bereich in dem die jeweilige Probe angeordnet ist, kann ein Reservoir ausgebildet sein, mit dem eine flüssige Probe in Form und in einem sensitiven Bereich gehalten und außerdem eine ausreichend große Probenmenge vorgehalten werden kann.

Eine Schicht in der die mindestens eine elektrische Leiterbahn und/oder das mindestens eine Heizelement integriert sind/ist kann beispielsweise mit einer elektrischen Passivierung bzw. Isolierung, die zwischen dem mindestens einen Heizelement und der wärmeleitenden Schicht angeordnet sein kann, gebildet sein. Die elektrische Passivierung kann beispielsweise mit Siliziumdioxid gebildet sein.

Vorzugsweise weist die wärmeleitende Schicht eine Wärmeleitfähigkeit von mindestens 200 W/(m K) auf. Die wärmeleitende Schicht kann beispielsweise mit oder aus Gold gebildet sein. Durch die wärmeleitende Schicht kann vorteilhaft eine besonders homogene Temperaturverteilung im ersten Teilbereich der ersten Oberfläche der freitragenden Membran gewährleistet werden. Zudem können Wärmeemissionsverluste bzw. unerwünschte Wärmestrahlungsverluste in und um diesen Bereich verringert und dadurch die Sensitivität des Sensors weiter erhöht werden.

Vorzugsweise sind die elektrischen Leiter der Thermoelemente von dem äußeren Rand der freitragenden Membran ausgehend auf der ersten Oberfläche der freitragenden Membran bis an den äußeren Rand des ersten Teilbereichs der ersten Oberfläche der freitragenden Membran herangeführt.

Entlang der Thermokette können mehrere erste Verbindungsstellen und mehrere zweite Verbindungsstellen der Thermoelemente abwechseln alternierend ausgebildet sein. Die ersten Verbindungsstellen und die zweiten Verbindungsstellen können jeweils zwei elektrische Leiter, die mit unterschiedlichen Werkstoffen gebildet sind, miteinander elektrisch verbinden. Vorzugsweise sind die ersten Verbindungsstellen an dem äußeren Rand des ersten Teilbereichs der ersten Oberfläche angeordnet. Die zweiten Verbindungsstellen können von dem äußeren Rand des ersten Teilbereichs der ersten Oberfläche beabstandet angeordnet sein. Besonders vorzugsweise sind die zweiten Verbindungsstellen auf dem Substrat der Trägerstruktur oder auf den äußeren Randbereichen der freitragenden Membran angeordnet.

Vorzugsweise umgibt die Thermokette die mindestens eine elektrische Leiterbahn, das mindestens eine Heizelement bzw. den ersten Teilbereich der ersten Oberfläche zumindest teilweise mäanderförmig. Dazu kann die Thermokette mit mindestens zehn in Reihe miteinander verbundenen Thermoelementen, vorzugsweise mit mindestens zwanzig in Reihe miteinander verbundenen Thermoelementen, besonders vorzugsweise mit mindestens vierzig in Reihe oder noch mehr miteinander verbundenen Thermoelementen, gebildet sein.

Somit kann ein mittels der mindestens einen Thermokette erfasster Temperaturunterschied, beispielsweise der Betrag des mindestens einen Temperaturgradienten, dem Temperaturunterschied zwischen einer Temperatur der freitragenden Membran an oder auf dem ersten Teilbereich der ersten Oberfläche der freitragenden Membran und einer Temperatur des Substrats oder einer Temperatur der freitragenden Membran an oder auf den Randbereichen der ersten Oberfläche der freitragenden Membran entsprechen.

Vorzugsweise weist das mindestens eine Heizelement mindestens zwei elektrische Kontaktelemente auf, die mit den äußeren Enden der elektrischen Leiterbahn des mindestens einen Heizelements elektrisch verbunden sein können. Die mindestens zwei elektrischen Kontaktelemente des mindestens einen Heizelements können auf dem Substrat oder auf einem äußeren Randbereich der freitragenden Membran angeordnet sein.

Zusätzlich oder alternativ kann auch die mindestens eine Thermokette mindestens zwei weitere elektrische Kontaktelemente aufweisen, die jeweils mit einem äußeren Ende der mindestens einen Thermokette elektrisch verbunden sein können. Die mindestens zwei weiteren elektrischen Kontaktelemente können auf dem Substrat oder auf einem äußeren Randbereich der freitragenden Membran angeordnet sein.

Die mindestens eine elektronische Auswerte- und Steuereinheit kann, beispielsweise zur Kalibrierung, über die mindestens zwei elektrischen Kontaktelemente des mindestens einen Heizelements mit dem mindestens einen Heizelement und/oder über die mindestens zwei weiteren elektrischen Kontaktelemente der mindestens einen Thermokette mit der mindestens einen Thermokette elektrisch verbunden sein.

Vorzugsweise umfasst der Sensor ein Gehäuse, um eine möglichst hohe Signalstabilität zu erreichen und das thermische Rauschen weiter zu reduzieren. Die Trägerstruktur, das mindestens eine Heizelement und die mindestens eine Thermokette können mit der Probe in dem Gehäuse angeordnet sein. Besonders vorteilhaft ist das Gehäuse in einer thermostatischen Kammer angeordnet, wobei mittels der thermostatischen Kammer die unmittelbare Umgebung und das Gehäuse selbst auf einer konstanten vorgegebenen Temperatur gehalten werden kann. Das Gehäuse kann dabei vorteilhaft mit einem elektrisch isolierenden und thermisch leitenden Werkstoff, beispielsweise mit Kupfer, gebildet sein.

Zusätzlich kann das Gehäuse thermisch gut leitende Stütz- oder Haltestrukturen, die beispielsweise ebenfalls mit Kupfer gebildet sein können, aufweisen. Die Stütz- oder Haltestrukturen können im Inneren des Gehäuses angeordnet und dazu ausgebildet sein, die Trägerstruktur mit der freitragenden Membran, dem mindestens einen Heizelement und der mindestens einen Thermokette so aufzunehmen, zu stützen oder zu halten, dass die freitragende Membran beabstandet von einem äußeren Rahmen des Gehäuses bzw. einer inneren Oberfläche des äußeren Rahmens des Gehäuses angeordnet werden kann. Dazu können die Stütz- oder Haltestrukturen beispielsweise in Form von Stützpfeilern oder Haltestegen ausgebildet und jeweils an einem Ende mit dem äußeren Rahmen des Gehäuses und an einem anderen Ende mit der Trägerstruktur verbunden sein. Das Gehäuse kann gegenüber der Umgebung auch hermetisch abgeschlossen sein, was zumindest während der jeweiligen Messungen der Fall sein sollte. Dadurch kann eine Bestimmung unter Einhaltung von Vakuumbedingungen zumindest in der Nähe von Vakuum durchgeführt werden, um einen Sensor gekapselt in einem Vakuum betreiben zu können. Hierbei kann der vollständige Sensor in ein Vakuum gebracht werden. Lediglich die "Probenseite" des Sensors kann mit einer Mikrofluidik versorgt werden, um eine jeweilige Probe auf die Membran eines Sensors aufbringen zu können. Durch das Betreiben des Sensors im Vakuum, kann nochmals ein hohes Maß an Sensitivität gewonnen werden (ca. Faktor 6), da die thermischen Verluste und das thermische Rauschen deutlich gesenkt werden können. In diesem Fall können auf beiden Seiten der Membran Vakuumbedingungen herrschen. Lediglich der Bereich der Probenauflagefläche kann außerhalb dieser Bedingungen liegen. Es kann so ein gekapseltes Mikrofluidiksystem vorhanden sein.

Die Atmosphäre oberhalb des sensitiven Bereichs, an dem eine Probe angeordnet sein kann, kann definiert verändert werden. Wenn ein Sensor frei an der Luft betrieben werden würde, würde die Verdampfungskälte der wässrigen Lösung, in der eine Probe enthalten sein kann, das eigentliche Messsignal um ein Vielfaches überlagern. Daher sollte die Atmosphäre im eigentlichen Messraum um die jeweilige Probe kontrolliert werden. Im einfachsten Fall kann man das Probenvolumen hermetisch abschließen und abwarten bis sich ein ausgeglichener Dampfdruck eingestellt hat. Damit kann eine Verdampfung der Flüssigkeit unterbrochen werden.

Man kann die Atmosphärenbedingungen und dabei insbesondere den Druck besonders im Bereich in dem die jeweilige Probe angeordnet ist, aber auch definiert einstellen. Es kann an beiden Seiten der Membran auch der atmosphärische Druck, der auch in der Umgebung des Sensors und des Gehäuses herrscht, eingehalten sein.

Vorzugsweise sind lediglich die äußeren Randbereiche der freitragenden Membran oder das Substrat der Trägerstruktur mit den Stütz- oder Haltestrukturen verbunden. Besonders vorzugsweise ist die Trägerstruktur über die Stütz- oder Haltestrukturen mit dem Gehäuse bzw. dem äußeren Rahmen des Gehäuses verbunden. Um eine möglichst gute thermische Kontaktierung zwischen dem Gehäuse bzw. den Stütz- oder Haltestrukturen zu gewährleisten, kann die Trägerstruktur mittels einer Wärmeleitpaste, die zwischen der Trägerstruktur und den Stütz- oder Haltestrukturen angeordnet sein kann, mit den Stütz- oder Haltestrukturen verbunden sein.

Das Gehäuse kann auch elektrische Kontaktierungen umfassen, die von der Trägerstruktur ausgehend durch den äußeren Rahmen des Gehäuses in einen außerhalb des Gehäuses befindlichen Bereich geführt sind. Dabei können die elektrischen Kontaktierungen jeweils die elektrischen Kontaktelemente des mindestens einen Heizelements und/oder der mindestens einen Thermokette mit der mindestens einen elektronischen Auswerte- und Steuereinheit elektrisch verbinden.

Die Probe kann dabei an oder auf der von den Stütz- und Haltestrukturen abgewandten zweiten Oberfläche der freitragenden Membran angeordnet sein. Dabei kann die Sensitivität des Sensors auch von dem Abstand zwischen der Probe bzw. der freitragenden Membran und der inneren Oberfläche des Gehäuses bzw. des äußeren Rahmens des Gehäuses abhängen. So kann es sich als vorteilhaft erweisen, wenn ein Abstand zwischen der inneren Oberfläche des Gehäuses bzw. des äußeren Rahmens des Gehäuses und der freitragenden Membran oder der Probe mindestens 2,5 mm, vorzugsweise mindestens 5 mm beträgt.

Die erste Oberfläche der freitragenden Membran kann dabei mindestens 20 mm², vorzugsweise mindestens 30 mm² groß sein. Der erste Teilbereich der ersten Oberfläche kann mindestens 10 mm², vorzugsweise mindestens 15 mm² groß sein. Vorzugsweise beträgt die Dicke der freitragenden Membran dabei maximal 1000 µm, bevorzugt weniger als 500 nm, besonders vorzugsweise weniger als 350 nm. Durch die Wahl einer großen ersten Oberfläche der Membran bei gleichzeitig geringer Dicke der Membran kann insbesondere das Signal- Rausch-Verhältnis und damit auch die Messgenauigkeit des Sensors verbessert werden. Das Reservoir für die Probenaufnahme (aktive Fläche) ist aktuell ca. 1 mm x 1 mm x 0,3 mm bzw. in der großen Version 5 mm x 5 mm x 0,3 mm groß. Die aktive Fläche sollte im Bereich zwischen 0,1 mm x 0,1 mm x 0,3 mm bis 5 mm x 5 mm x 0,3 mm gewählt werden. Die Dicke kann im Bereich 0,3 mm bis 0,8 mm gewählt werden.

Die thermischen, chemischen und mechanischen Eigenschaften des Sensors können durch eine geeignete Materialauswahl bzw. Materialkombination und Geometrie der verschiedenen Komponenten vorteilhaft beeinflusst werden. Beispielsweise kann das Substrat mit Silizium gebildet sein. Die freitragende Membran kann mit einem Material gebildet sein, das eine im Vergleich zum Substrat und/oder der wärmeleitenden Schicht geringere Wärmeleitfähigkeit aufweist. Beispielsweise kann die freitragende Membran mit Siliziumnitrid gebildet sein. Zusätzlich oder alternativ kann das Substrat an einer von der freitragenden Membran abgewandten Seite bzw. Oberfläche eine weitere Schicht, die eine äußere Oberfläche des Substrats bilden kann, aufweisen. Die weitere Schicht kann auch mit einem bezüglich des Substrats thermisch und/oder elektrisch isolierenden Werkstoff, beispielsweise mit Siliziumnitrid, gebildet sein.

Vorteilhaft wirkt es sich auch aus, wenn die Materialien bzw. Werkstoffe der Thermoschenkel eines Thermoelements jeweils unterschiedlich große Seebeck Koeffizienten aufweisen und dabei gleichzeitig eine gute Kompatibilität bzw. Haftung beider Thermoschenkel mit mindestens einem Material bzw. Werkstoff der freitragenden Membran gewährleistet ist. Beispielsweise kann mindestens ein erster Thermoschenkel eines Thermoelements der mindestens einen Thermokette, vorzugsweise ein p-leitender Thermoschenkel, mit oder aus Antimon gebildet sein. Mindestens ein zweiter Thermoschenkel eines Thermoelement der mindestens einen Thermokette, vorzugsweise ein n-leitender Thermoschenkel, kann mit oder aus Bismuth gebildet sein.

Die Erfindung betrifft auch ein Sensorsystem.

Dabei kann in einem Oberflächenbereich, auf dem die Probe angeordnet ist, ein Biosensor angeordnet sein. Der Biosensor kann mit mindestens zwei in einem Abstand zueinander angeordneten Elektroden, die an eine elektrische Spannungsquelle mit bevorzugt konstanter elektrischer Spannung sowie an die mindestens eine elektronische Auswerte- und Steuereinheit angeschlossen sind, gebildet sein. Die Elektroden sind mit der mindestens einen elektronischen Auswerte- und Steuereinheit verbunden. Mit der elektronischen Auswerte- und Steuereinheit wird der elektrische Stromfluss zwischen den mindestens zwei Elektroden gemessen und mit der mindestens einen elektronischen Auswerte- und Steuereinheit wird eine für den Stoffwechsel der Probe charakteristische Messgröße erfasst und ausgewertet. Bei der Messgröße kann es sich bevorzugt um den pH-Wert handeln, der charakteristisch für Veränderung des Stoffwechsels biologischer Proben sein kann.

Die Elektroden können, wie auch elektrische Leiterbahnen, die zur elektronischen Auswerte- und Steuereinheit geführt sind, mittels Dünn- oder Dickschichttechniken auf der Oberfläche der Membran ausgebildet sein.

Die Elektroden sollten dabei unmittelbar an der jeweiligen Probe angeordnet sein. Sie können bevorzugt aus Titan aber auch aus Platin, Gold oder einem anderen geeigneten Metall ausgebildet werden.

Die Elektroden sind elektrisch vom Substrat, das üblicherweise mit Silicium gebildet sein kann, getrennt. Dies kann beispielsweise mittels einer dielektrischen Passivierungsschicht oder mit einer lokalen Modifizierung des Siliciums mit der es praktisch nicht mehr leitend ist, erreicht werden.

Die Elektroden können mittels Dünn- bzw. Dickschichttechniken aufgebracht werden.

Allein oder zusätzlich zu dem bereits genannten kann das Sensorsystem auch mit mindestens einem Messgerät, das an das Gehäuse angeschlossen oder darin angeordnet ist, gebildet sein. Mit dem Messgerät kann dann der Anteil an in der Atmosphäre innerhalb des Gehäuses enthaltenem Sauerstoff und/oder enthaltenem Kohlendioxid bestimmt werden. Anstelle eines Messgeräts kann auch mindesten ein dazu geeigneter Sensor im Gehäuse angeordnet sein. Das Gehäuse sollte dabei zur Umgebungsatmosphäre gasdicht abgeschlossen sein bzw. werden können. Je nach momentan ablaufendem Stoffwechsel in einer biologischen Probe wird der Anteil an Sauerstoff reduziert und dabei gleichzeitig der Kohlendioxidanteil erhöht oder umgekehrt, so dass man auch damit Aussagen über den momentanen Zustand der jeweiligen Probe treffen kann.

Das Sensorsystem kann auch mit mindestens zwei wie weiter oben beschriebenen Sensoren gebildet sein, wobei die mindestens zwei Sensoren in einem gemeinsamen Gehäuse angeordnet sind. Dabei kann ein erster der mindestens zwei Sensoren zur Erfassung thermodynamischer Kenngrößen einer zu untersuchenden Probe und der zweite der mindestens zwei Sensoren als Referenzsensor verwendet werden.

Vorzugsweise kann der Referenzsensor auch zur Bestimmung und/oder Kompensation von unerwünschten Temperaturgradienten, die sich auch in Abwesenheit einer Probe beispielsweise aufgrund von unkontrollierbaren Wärmequellen oder fertigungsbedingten Asymmetrien in dem ersten Sensor ausbilden können, verwendet werden. Dazu können die mindestens zwei Sensoren auch eine gemeinsame Trägerstruktur und/oder ein gemeinsames Substrat aufweisen. Die Trägerstrukturen und/oder die Substrate der jeweiligen Sensoren des Sensorsystems können auch stoff- oder kraftschlüssig miteinander verbunden sein, um zumindest zeitweise einen Wärmeaustausch bzw. eine Kompensation unerwünschter Temperaturgradienten, beispielsweise mittels des mindestens einen Heizelements des Referenzsensors, zu ermöglichen. Dazu kann das Sensorsystem zusätzlich zu dem ersten Sensor auch mehrere zweite als Referenzsensoren ausgebildete Sensoren umfassen. Vorzugsweise ist das Sensorsystem mit mindestens vier wie weiter oben beschriebenen Sensoren gebildet, wobei die mindestens vier Sensoren in einem Gehäuse angeordnet sein können.

Vorteilhaft können zwei Sensoren direkt nebeneinander auf einem Wafer als Substrat angeordnet sein, was zu einem quasi integrierten dualen Sensor führt. Die Thermoelemente der beiden Sensoren kann man dabei direkt miteinander verschalten. Dazu kann man entweder bereits die elektrischen Leiterbahnen auf den Sensoren, die die Thermoketten bilden, direkt miteinander elektrisch leitend verbinden. Alternativ kann man dies aber auch außerhalb der Sensoren mit einer entsprechend ausgebildeten elektronischen Auswerteeinheit, die mit den zwei Sensoren verbunden ist, elektronisch erreichen.

Bei einer differentiellen Auswertung kann der Wärmefluss zwischen den beiden Reservoirs der zwei Sensoren gemessen werden. So kann zwischen den beiden Messpositionen an den zwei Sensoren die Temperaturdifferenz gemessen werden.

Die Erfindung betrifft auch ein Verfahren zur Erfassung thermodynamischer Kenngrößen einer Probe mit dem weiter oben beschriebenen Sensor oder Sensorsystem.

Bei dem Verfahren wird in einem ersten Schritt mittels des mindestens einen Heizelements eine Kalibrierung durchgeführt, bei der die an den Enden der mindestens einen Thermokette anliegende elektrische Spannung in Abhängigkeit der Heizleistung des mindestens einen Heizelements erfasst wird.

In einem zweiten Schritt wird anhand der in dem ersten Schritt durchgeführten Kalibrierung mindestens ein Temperaturgradient, der sich in der freitragenden Membran aufgrund eines in der Probe ablaufenden thermodynamischen Prozesses und einer damit verbundenen Wärmeabgabe- oder Wärmeaufnahme ausgebildet hat, erfasst.

Die Probe kann dabei zeitlich vor dem zweiten Schritt und/oder vor dem ersten Schritt in dem Gehäuse und/oder an oder auf der ersten Oberfläche der freitragenden angeordnet werden. Während des zweiten Schritts kann die Heizleistung des mindestens einen Heizelements konstant gehalten und/oder auf Null reduziert werden, sodass während des zweiten Schritts keine Erwärmung der Probe mittels des mindestens einen Heizelements erfolgen kann. Insbesondere kann das mindestens eine Heizelement speziell für die Kalibrierung des Sensors bzw. der mindestens einen Thermokette ausgebildet sein.

Vorzugsweise wird die Temperatur des Substrats der Trägerstruktur und/oder der äußeren Randbereiche der freitragenden Membran während des ersten und/oder während des zweiten Schritts konstant gehalten. Das kann beispielsweise dadurch erreicht werden, dass das Gehäuse mit der Trägerstruktur, der mindestens einen Thermokette und dem mindestens einen Heizelement in einer thermostatischen Kammer angeordnet und eine gute Wärmeleitung zwischen dem Gehäuse, den Stütz- oder Haltestrukturen und dem Substrat der Trägerstruktur bzw. den äußeren Randbereichen der freitragenden Membran gewährleistet wird. Alternativ oder zusätzlich kann auch das Gehäuse selbst als thermostatische Kammer ausgebildet sein.

Insbesondere kann die Temperatur des Gehäuses, des Substrats der Trägerstruktur und/oder der äußeren Randbereiche der freitragenden Membran während des ersten und/oder während des zweiten Schritts gleich sein. Dadurch kann eine besonders genaue Erfassung eines sich von einem zentralen Bereich der freitragenden Membran, beispielsweise von dem ersten Teilbereich der ersten Oberfläche, ausbildenden Temperaturgradienten erreicht werden.

Die Probe kann zumindest während der Durchführung des zweiten Schritts in einer Verkapselung angeordnet werden. Die Verkapselung kann mit einer die Probe zumindest teilweise umschließenden Membran, Flüssigkeit und/oder einem oder mehreren Flüssigkeitstropfen, gebildet sein. Vorzugsweise wird die Trägerstruktur an oder auf den Stütz- oder Haltestrukturen des Gehäuses so angeordnet, dass die Probe mit der Verkapselung auf der zweiten Oberfläche der freitragenden Membran aufliegen bzw. angeordnet werden kann.

Bei der Durchführung des Verfahrens kann ein Temperaturgradient mit mindestens einem Puls erreicht werden. Bei einem Puls kann die Temperatur im Bereich der Probe innerhalb eines vorgegebenen Zeitintervalls um eine vorgebbare Temperatur erhöht werden, bevorzugt kann die Temperatur innerhalb von 5 s im Bereich zwischen 0,05 K und 5 K erhöht werden. Anschließend wird die Verringerung der Temperatur im Bereich der Probe zeitaufgelöst erfasst und der entsprechend erfasste Temperaturabfallverlauf mit vorab zeitaufgelöst erfassten Temperaturabfallverläufen, die an vergleichbaren Proben mit bekannter Stoffwechselfunktionalität erfasst worden sind, mittels der mindestens einen elektronischen Auswerte- und Steuereinheit verglichen wird. Auch damit kann man Aussagen über die momentane Stoffwechselfunktionalität einer biologischen Probe erhalten. Die pulsförmige Temperaturerhöhung mit zeitaufgelöster Erfassung der Temperaturabfallverläufe sowie der Vergleich mit vorab erfassten Temperaturabfallverläufen kann man zyklisch in bevorzugt gleichen aber auch ungleichen Zeitabständen wiederholen.

Die Erwärmung wird dabei periodisch durchgeführt, wobei der elektrische Strom der mit einem elektrischen Strom im Bereich 50 µA und 5 mA durch das Heizelement strömen kann mit der Frequenz ω der Funktion I(t) =I₀cos(ωt) folgend ist. Dabei wird und der Spannungsabfall über das Heizelement detektiert.

Aus den dritten Harmonischen Oberschwingungen der elektrischen Spannung kann die Temperaturoszillation des Heizelements gemäß der Gleichung ΔT(t) = ΔT₀cos(2ωt+ φ) berechnet werden, wie es mit der bekannten 3-Omega Methode üblicherweise erfolgen kann.

Aus der der charakteristischen Temperaturantwort kann man dann Informationen über den Zustand der Probe erhalten, wie dies z.B. ein Anwachsverhalten, das Wachstum, die jeweilige Zellmenge u.a.m. sein können.

Der erfindungsgemäße Sensor, das erfindungsgemäße Sensorsystem und/oder das erfindungsgemäße Verfahren können/kann zur Erfassung und Bestimmung thermodynamischer Kenngrößen verschiedener Proben, beispielsweise medizinischer oder biologischer Proben, verwendet werden. Eine thermodynamische Kenngröße kann beispielsweise eine Temperatur, eine Kondensationswärme oder eine Wärmekapazität sein. Dabei können mittels des Sensors chemische Reaktionen, die in der Probe ablaufen näher bestimmt werden. Besonders vorteilhaft können/kann der erfindungsgemäße Sensor, das erfindungsgemäße Sensorsystem und/oder das erfindungsgemäße Verfahren zur Bestimmung thermodynamischer Kenngrößen von Stoffwechselvorgängen in biologischen Zellen und/oder von Kondensationsprozessen an Oberflächen oder in dünnen Filmen verwendet werden.

Nachfolgend soll die Erfindung anhand von Ausführungsbeispielen näher beschrieben werden.

Dabei zeigen
- Figur 1a: eine schematische Ansicht einer Vorderseite eines Beispiels eines erfindungsgemäßen Sensors,
- Figur 1b: eine Schnittdarstellung des in Figur 1 gezeigten Beispiels eines erfindungsgemäßen Sensors,
- Figur 1c: eine Schnittdarstellung des in Figur 1 gezeigten Beispiels eines erfindungsgemäßen Sensors mit zusätzlichem Reservoir,
- Figur 2a: ein Beispiel eines erfindungsgemäßen Sensors mit Gehäuse,
- Figur 2b: ein Beispiel eines erfindungsgemäßen Sensors mit Gehäuse, in dem Vakuumbedingungen eingehalten werden können und
- Figur 3: zwei miteinander verbundene Sensoren für eine verbesserte Kompensation von Fehlern.

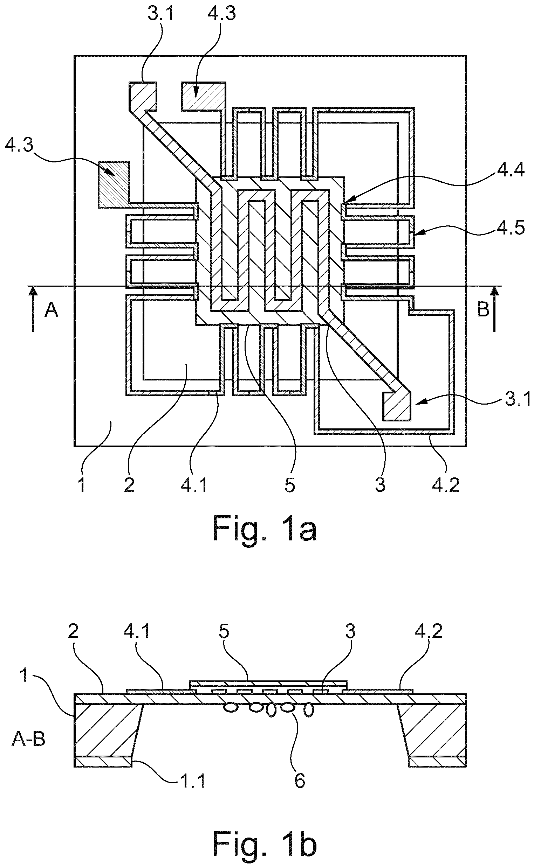

Figur 1a zeigt das Beispiel eines Sensors zur Erfassung thermodynamischer Kenngrößen von biologischen Zellen als Probe 6.

Der Sensor umfasst eine Trägerstruktur, die mit einem Substrat 1 und einer freitragenden Membran 2 gebildet ist. Zusätzlich kann die Trägerstruktur auch mit einer äußeren Schicht 1.1 gebildet sein. Das Substrat 1 ist mit Silizium gebildet, wobei die Dicke des Substrats 1 etwa 300 µm beträgt. Die freitragende Membran 2 ist mit Siliziumnitrid gebildet und weist eine Dicke von 300 nm auf. Die freitragende Membran ist quadratisch mit einer Oberfläche von 36 mm² ausgebildet. Das Substrat 1 weist einen Hohlraum auf, der auf einer Seite mit der freitragenden Membran 2 verschlossen ist. Die äußeren Randbereiche der freitragenden Membran 2 sind dabei auf dem Substrat 1 angeordnet, sodass die Trägerstruktur eine Mikrobrücke bildet. Das Substrat 1 ist dazu rahmenförmig ausgebildet. Hier gibt es jetzt eben das neue Reservoir, das die Funktion des Probenhalters übernimmt.

Der Sensor umfasst weiterhin ein Heizelement 3. Das Heizelement 3 weist eine elektrische Leiterbahn auf, die mit Antimon gebildet und mäanderförmig auf einem zentralen Bereich als ersten Teilbereich der ersten Oberfläche der freitragenden Membran 2 angeordnet ist. Zusätzlich weist das Heizelement 3 elektrische Kontaktelemente 3.1 auf, die mit der elektrischen Leiterbahn elektrisch verbunden sind, wobei die elektrischen Kontaktelemente 3.1 auf dem Substrat 1 angeordnet sind. Die elektrische Leiterbahn ist dabei in einer Passivierungsschicht, die mit Siliziumdioxid gebildet ist, angeordnet.

Auf der Passivierungsschicht, in der die elektrische Leiterbahn des Heizelements 3 integriert ist, ist eine mit Gold gebildete wärmeleitende Schicht 5 angeordnet. Die dem Heizelement 3 zugewandte Oberfläche der wärmeleitenden Schicht 5 ist zu dem ersten Teilbereich der ersten Oberfläche der freitragenden Membran 2 korrespondierend angeordnet. Insbesondere weist die wärmeleitende Schicht 5 eine Dicke von 300 nm und eine quadratische Oberfläche von 16 mm² auf. Dementsprechend ist auch der erste Teilbereich der ersten Oberfläche der freitragenden Membran quadratisch und mit einer Größe von 16 mm² ausgebildet.

Der Sensor umfasst weiterhin eine Thermokette. Die Thermokette ist mit mehreren elektrisch in Reihe miteinander verbundenen Thermoelementen, die wiederum jeweils mit zwei unterschiedlichen Thermoschenkeln 4.1, 4.2 sind, gebildet und umschließt die elektrische Leiterbahn des Heizelements 3 auf der ersten Oberfläche der freitragenden Membran 2 mäanderförmig. An den beiden äußeren Enden der Thermokette, die mit den Thermoschenkeln 4.1, 4.2 gebildet ist, sind jeweils weitere elektrische Kontaktelemente 4.3 angeordnet und mit den Thermoelementen, die wiederum mit Thermoschenkeln 4.1, 4.2 gebildet sind, elektrisch verbunden.

Der Sensor umfasst auch eine elektronische Auswerte- und Steuereinheit (nicht gezeigt), die mit der Thermokette elektrisch verbunden und dazu ausgebildet ist, anhand einer mittels des Heizelements 3 durchgeführten Kalibrierung und anhand der biologischen Zellen als Probe 6 Temperaturgradienten, die sich in der freitragenden Membran 2 aufgrund von in den biologischen Zellen als Probe 6 ablaufenden Stoffwechselprozessen und einer damit verbundenen Wärmeabgabe ausgebildet haben, zu erfassen.

Dazu sind die elektrischen Leiter der Thermoschenkel 4.1, 4.2 von dem äußeren Rand der freitragenden Membran 2 ausgehend auf der ersten Oberfläche der freitragenden Membran 2 bis an den äußeren Rand des ersten Teilbereichs der ersten Oberfläche der freitragenden Membran 2 herangeführt.

Entlang der Thermokette sind mehrere erste kalte Verbindungsstellen 4.4 und mehrere zweite heiße Verbindungsstellen 4.5 abwechseln alternierend in der Thermokette an den Thermoschenkeln 4.1, 4.2 ausgebildet. Die ersten kalten Verbindungsstellen 4.4 sind an dem äußeren Rand des ersten Teilbereichs der ersten Oberfläche, der zu dem äußeren Rand der wärmeleitenden Schicht 5 parallel verläuft, angeordnet. Die zweiten heißen Verbindungsstellen 4.5 sind von dem äußeren Rand des ersten Teilbereichs der ersten Oberfläche beabstandet und auf dem Substrat 1 der Trägerstruktur angeordnet.

Durch eine derart gerichtete Anordnung der Thermoelemente können Temperaturgradienten, die sich vertikal zu der Normalen der ersten Oberfläche in der freitragenden Membran 2 in Richtung der äußeren Randbereiche der freitragenden Membran 2 ausbilden, effizient über die weiteren Kontaktelemente 4.3 der Thermokette mittels der elektronischen Auswerte- und Steuereinheit erfasst werden.

Bei dem in Figur 1a gezeigten Beispiel sind die p-leitenden Thermoschenkel 4.1 der Thermoelemente aus Antimon und die n-leitenden Thermoschenkel 4.2 der Thermoelemente aus Bismut gebildet. Die Dicke der p-leitenden Thermoschenkel 4.1, der n-leitenden Thermoschenkel 4.2 und der weiteren Schicht 1.1 beträgt 200 nm.

Wiederkehrende Merkmale sind in den folgenden Figuren mit identischen Bezugszeichen wie in Figur 1a versehen.

Figur 1b zeigt einen schematischen Schichtaufbau des in Figur 1a gezeigten Beispiels eines erfindungsgemäßen Sensors. Insbesondere zeigt Figur 1b einen Querschnitt entlang der in Figur 1a gezeigten Schnittlinie A-B.

Auf einer von der freitragenden Membran 2 wegweisenden Oberfläche des Substrats 1 ist eine weitere äußere Schicht 1.1 der Trägerstruktur angeordnet, die mit Siliziumnitrid gebildet ist. Die biologischen Zellen als Probe 6 sind in mehreren Flüssigkeitstropfen als Verkapselung auf der von dem Heizelement 3 wegweisenden zweiten Oberfläche der freitragenden Membran 2 angeordnet.

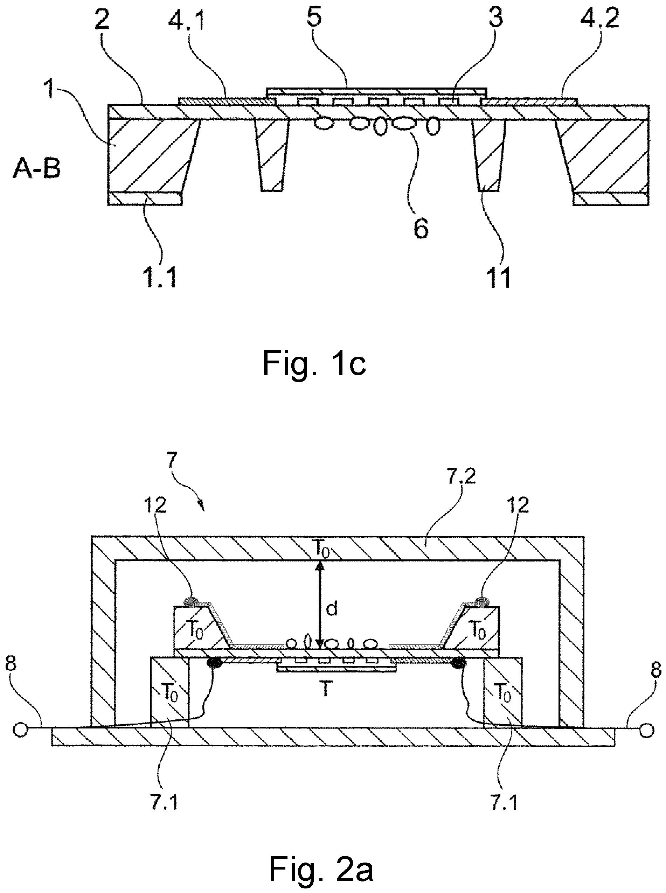

Die in Figur 1c gezeigte Ausführung unterscheidet sich lediglich dadurch, dass um die Probe 6 ein Reservoir 11 in Form einer Kammer, in der die Probe 6 aufgenommen ist, an der Seite der Membran 2 angeordnet ist, an der auch die jeweilige biologische Probe 6 angeordnet ist.

Figur 2a zeigt ein Beispiel eines erfindungsgemäßen Sensors, wie in den Figuren 1a und 1b gezeigt, wobei der Sensor zusätzlich ein Gehäuse 7, das mit Kupfer gebildet ist, aufweist. Das Gehäuse 7 ist mit mehreren Pfeilern als Stützstrukturen 7.1 zur Aufnahme bzw. Fixierung der Trägerstruktur und mit einem äußeren Rahmen 7.2 gebildet. Sowohl die Stützstrukturen 7.1 als auch der äußere Rahmen 7.2 sind mit Kupfer gebildet.

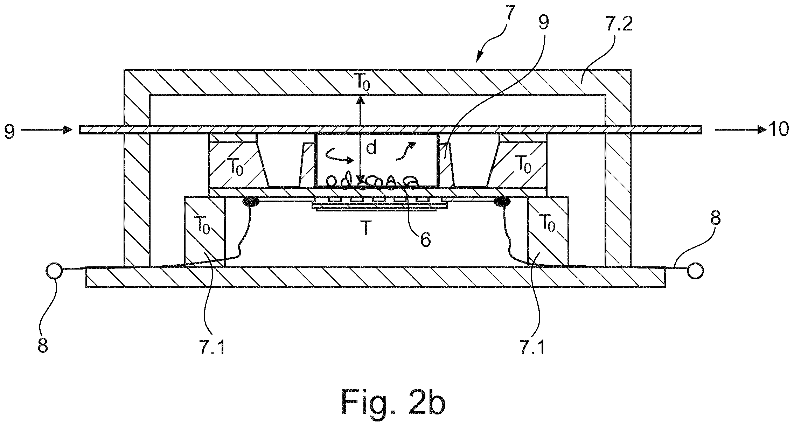

Der in Figur 2b gezeigte Aufbau unterscheidet sich von dem, wie er in Figur 2a gezeigt ist, dadurch dass zumindest im Bereich der um die Probe 6 angeordnet ist, Vakuumbedingungen eingehalten werden können. Dazu ist eine Leitung mit einem Zulauf 9 und einem Ablauf 10 durch das Gehäuses 7 geführt, mit der ein Mikrofluid in und durch das Gehäuse 7 geführt werden kann.

Die Pfeiler als Stützstrukturen 7.1 sind auf einer von der Trägerstruktur abgewandten ersten Seite mit dem äußeren Rahmen 7.2 und auf einer der Trägerstruktur zugewandten Seite im Bereich der äußeren Randbereiche der ersten Oberfläche mit der freitragenden Membran 2 verbunden. Das Substrat 1 und die weitere äußere Schicht 1.1 sind dabei an einer von den Stützstrukturen 7.1 wegweisenden Seite der freitragenden Membran 2 angeordnet.

Elektrische Kontaktierungen 8 sind jeweils von den elektrischen Kontaktelementen 3.1 des Heizelements 3 und den weiteren elektrischen Kontaktelementen 4.3 der Thermokette ausgehend durch den äußeren Rahmen 7.2 des Gehäuses 7 in einen Bereich außerhalb des Gehäuses 7 geführt und dort mit der elektronischen Auswerte- und Steuereinheit elektrisch verbunden. Die Übergabestelle ist dabei vorzugsweise auf dem massiven Kupferblock, um einen eventuellen Wärmeaustrag zu vermeiden.

In Figur 2a sind auch die Elektroden 12 für den Biosensor dargestellt.

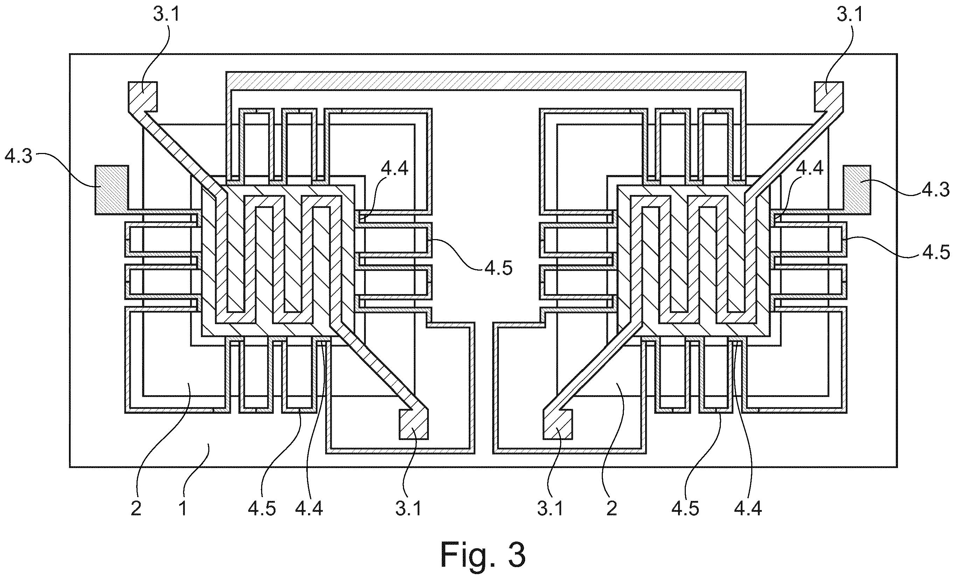

Die Figur 3 zeigt, wie man zwei Sensoren, die gemäß dem in den vorab erläuterten Beispielen ausgebildet und auf einem Substrat 1 gemeinsam angeordnet sein können, miteinander kombinieren kann. Dabei sind mindestens zwei Thermoketten, die mit Thermoschenkeln 4.1, 4.2 und einem elektrischen Kontaktelement 4.3 gebildet sind, der beiden Sensoren elektrisch in Reihe geschaltet, wodurch man die beiden Sensoren so betreiben kann, wie es im allgemeinen Teil der Beschreibung erläutert worden ist.

Ein Verfahren zur Erfassung thermodynamischer Kenngrößen der biologischen Zellen als Probe 6 mit einem wie in den Figuren 1a, 1b und 2 gezeigten Sensor umfasst zumindest einen ersten und einen zweiten Schritt.

In dem ersten Schritt wird mittels des Heizelements 3 eine Kalibrierung durchgeführt, bei der die an den Enden der Thermokette anliegende elektrische Spannung in Abhängigkeit der Heizleistung des Heizelements 3 erfasst wird. Dabei ist die elektronische Auswerte- und Steuereinheit über die elektrischen Kontaktierungen 8, die die elektrischen Kontaktelemente 3.1 und die weiteren elektrischen Kontaktelemente 4.3 mit dem Heizelement 3 und der Thermokette elektrisch verbunden. Insbesondere umfasst die elektronische Auswerte- und Steuereinheit auch einen Regler, mit dem während des ersten Schritts die Heizleistung des Heizelements 3 variiert wird. Während des ersten Schritts sind die biologischen Zellen als Probe 6 nicht in dem Gehäuse 7 angeordnet.

Nach der Kalibrierung werden die biologischen Zellen als Probe 6 in den Flüssigkeitstropfen als Verkapselung auf einer dem ersten Teilbereich der ersten Oberfläche gegenüberliegenden zweiten Oberfläche der freitragenden Membran 2, insbesondere der elektrischen Leiterbahn des Heizelements 3 gegenüber, angeordnet.

In dem zweiten Schritt werden dann anhand der in dem ersten Schritt durchgeführten Kalibrierung Temperaturgradienten, die sich in der freitragenden Membran 2 aufgrund von in den biologischen Zellen als Probe 6 ablaufenden Stoffwechselprozessen und einer damit verbundenen Wärmeabgabe ausgebildet haben, erfasst. Während des zweiten Schritts erfolgt keine Regelung und auch keine Erwärmung der Probe 6 mittels des Heizelements 3. Die Heizleistung des Heizelements 3 beträgt während des zweiten Schritts Null Watt.

Während des ersten und des zweiten Schritts ist das Gehäuse 7 in einer thermostatischen Kammer angeordnet, sodass während des ersten und des zweiten Schritts des weiter oben beschriebenen Verfahrens sowohl das Gehäuse 7 mit dem äußeren Rahmen 7.2 und den Stützstrukturen 7.1 als auch das Substrat 1 der Trägerstruktur konstant auf ein und derselben Temperatur T₀ gehalten werden.

Mit dem beschriebenen Sensor und Verfahren können Temperaturgradienten im Bereich von Millikelvin bei einer Wärmeleistung der Probe im Bereich von Mikrowatt bis zu wenigen Nanowatt zuverlässig und genau bestimmt werden. Dabei kann der Sensor eine Sensitivität von 100 V/W ± 25 V/W erreichen.

Lediglich in den Ausführungsbeispielen offenbarte Merkmale der verschiedenen Ausführungsformen können miteinander kombiniert und einzeln beansprucht werden.

### Bezugszeichen

- 1: Substrat
- 1.1: Schicht
- 2: Membran
- 3: Heizelement
- 3.1: elektrisches Kontaktelement
- 4.1: Thermoschenkel
- 4.2: Thermoschenkel
- 4.3: elektrisches Kontaktelement
- 4.4: erste Verbindungsstelle (kalt)
- 4.5: zweite Verbindungsstelle (heiß)
- 5: wärmeleitende Schicht
- 6: Probe
- 7: Gehäuse
- 7.1: thermisch leitende Stütz- oder Haltestruktur
- 7.2: Rahmen
- 8: elektrische Kontaktierung
- 9: Zulauf
- 10: Ablauf
- 11: Reservoir
- 12: Elektroden

## Patentansprüche

1. Sensor zur Erfassung thermodynamischer Kenngrößen einer Probe (6), umfassend
eine Trägerstruktur (1, 1.1, 2), die mindestens ein Substrat (1) und mindestens eine freitragende Membran (2) aufweist, wobei Randbereiche der mindestens einen freitragenden Membran (2) auf dem mindestens einen Substrat (1) angeordnet sind,
mindestens ein Heizelement (3), das mit mindestens einer elektrischen Leiterbahn, die auf einem ersten Teilbereich einer ersten Oberfläche der freitragenden Membran (2) angeordnet ist, gebildet ist,
mindestens eine Thermokette (4.1, 4.2, 4.3), die mit mehreren elektrisch in Reihe miteinander verbundenen Thermoelementen (4.1, 4.2) gebildet ist und die mindestens eine elektrische Leiterbahn des mindestens einen Heizelements (3) und/oder das mindestens eine Heizelement (3) auf der ersten Oberfläche der freitragenden Membran (2) zumindest teilweise umschließt,
mindestens eine elektronische Auswerte- und Steuereinheit, die mit der Thermokette (4.1, 4.2, 4.3) elektrisch verbunden und dazu ausgebildet ist, anhand einer mittels des mindestens einen Heizelements (3) durchgeführten Kalibrierung und einer an oder auf der freitragenden Membran (2) angeordneten Probe (6) mindestens einen Temperaturgradienten, der sich in der freitragenden Membran (2) aufgrund eines in der Probe (6) ablaufenden thermodynamischen Prozesses und einer damit verbundenen Wärmeabgabe- oder Wärmeaufnahme ausgebildet hat, zu erfassen.

2. Sensor nach dem vorhergehenden Anspruch, **dadurch gekennzeichnet, dass** die Probe (6) während der Erfassung des mindestens einen Temperaturgradienten mittels der elektronischen Auswerte- und Steuereinheit an oder auf einer dem ersten Teilbereich der ersten Oberfläche gegenüberliegenden zweiten Oberfläche der freitragenden Membran (2) und/oder auf einer von der mindestens einen elektrischen Leiterbahn des mindestens einen Heizelements (3) wegweisenden zweiten Oberfläche der freitragenden Membran (2) und dort der mindestens einen elektrischen Leiterbahn des mindestens einen Heizelements (3) direkt gegenüberliegend angeordnet ist.

3. Sensor nach einem der vorhergehenden Ansprüche, **dadurch gekennzeichnet, dass** auf der mindestens einen elektrische Leiterbahn des mindestens einen Heizelements (3) oder auf einer Schicht, in der die mindestens eine elektrische Leiterbahn des mindestens einen Heizelements (3) und/oder das mindestens eine Heizelement (3) integriert sind/ist, eine wärmeleitende Schicht (5), angeordnet ist, wobei die der mindestens einen elektrischen Leiterbahn des mindestens einen Heizelements (3) und/oder die dem mindestens einen Heizelement (3) zugewandte Oberfläche der wärmeleitenden Schicht (5) zu dem ersten Teilbereich der ersten Oberfläche der freitragenden Membran (2) korrespondierend angeordnet ist und/oder die wärmeleitende Schicht (5) mit einem Metall, insbesondere mit Gold gebildet ist.

4. Sensor nach einem der vorhergehenden Ansprüche, **dadurch gekennzeichnet, dass** die elektrischen Leiter der Thermoelemente (4.1, 4.2) von dem äußeren Rand der freitragenden Membran (2) ausgehend auf der ersten Oberfläche der freitragenden Membran (2) bis an den äußeren Rand des ersten Teilbereichs der ersten Oberfläche der freitragenden Membran (2) herangeführt sind.

5. Sensor nach einem der vorhergehenden Ansprüche, **dadurch gekennzeichnet, dass** entlang der mindestens einen Thermokette (4.1, 4.2, 4.3) mehrere erste Verbindungsstellen (4.4) und mehrere zweite Verbindungsstellen (4.5) der Thermoelemente (4.1, 4.2) abwechseln alternierend ausgebildet sind, wobei die ersten Verbindungsstellen (4.4) und die zweiten Verbindungsstellen (4.5) jeweils zwei elektrische Leiter (4.1, 4.2), die mit unterschiedlichen Werkstoffen gebildet sind, miteinander elektrisch verbinden und die ersten Verbindungsstellen (4.4) an dem äußeren Rand des ersten Teilbereichs der ersten Oberfläche angeordnet sind und/oder die zweiten Verbindungsstellen (4.5) von dem äußeren Rand des ersten Teilbereichs der ersten Oberfläche beabstandet und/oder auf dem Substrat (1) der Trägerstruktur (1, 1.1, 2) angeordnet sind.

6. Sensor nach einem der vorhergehenden Ansprüche, **dadurch gekennzeichnet, dass** das mindestens eine Heizelement (3) mindestens zwei elektrische Kontaktelemente (3.1) aufweist, die mit den äußeren Enden der mindestens einen elektrischen Leiterbahn des mindestens einen Heizelements (3) elektrisch verbunden und/oder auf dem Substrat (1) angeordnet sind und/oder die mindestens eine Thermokette (4, 4.1, 4.2) mindestens zwei weitere elektrische Kontaktelemente (4.3) aufweist, die jeweils mit einem äußeren Ende der Thermokette (4.1, 4.2, 4.3) elektrisch verbunden und/oder auf dem Substrat (1) angeordnet sind.

7. Sensor nach einem der vorhergehenden Ansprüche, **dadurch gekennzeichnet, dass** die Trägerstruktur (1, 1.1, 2), das mindestens eine Heizelement (3), die mindestens eine Thermokette (4.1, 4.2, 4.3) in einem Gehäuse (7) angeordnet sind, wobei das Gehäuse (7) mit Kupfer gebildet ist und/oder das Gehäuse (7) thermisch leitende Stütz- oder Haltestrukturen (7.1) aufweist und/oder das Gehäuse (7) über thermisch leitende Stütz- oder Haltestrukturen (7.1) und/oder über eine Wärmeleitpaste mit der Trägerstruktur (1, 1.1, 2) verbunden ist und/oder elektrische Kontaktierungen (8) von der Trägerstruktur (1, 1.1, 2) ausgehend durch einen äußeren Rahmen (7.2) des Gehäuses (7) in einen außerhalb des Gehäuses (7) befindlichen Bereich geführt sind und/oder das Gehäuse (7) in einer thermostatischen Kammer angeordnet ist.

8. Sensor nach einem der vorhergehenden Ansprüche, **dadurch gekennzeichnet, dass** die erste Oberfläche der freitragenden Membran (2) mindestens 10 mm² groß ist und/oder die Dicke der freitragenden Membran (2) maximal 1 µm beträgt und/oder ein Abstand zwischen der von dem mindestens einen Heizelement (3) abgewandten zweiten Oberfläche der freitragenden Membran (2) und dem Gehäuse (7) und/oder einem äußeren Rahmen (7.2) des Gehäuses (7) mindestens 5 mm beträgt.

9. Sensor nach einem der vorhergehenden Ansprüche, **dadurch gekennzeichnet, dass** das Substrat (1) mit Silizium gebildet ist und/oder die freitragende Membran (2) mit Siliziumnitrid gebildet ist und/oder p-leitende Thermoschenkel (4.1) der Thermoelemente (4.1, 4.2) mit Antimon gebildet sind und/oder n-leitende Thermoschenkel (4.2) der Thermoelemente (4.1, 4.2) mit Bismuth gebildet sind.

10. Sensorsystem nach einem der Ansprüche 1 bis 9, wobei in einem Oberflächenbereich, auf dem die Probe (6) angeordnet ist, ein Biosensor, der mit mindestens zwei in einem Abstand zueinander angeordneten Elektroden (12) gebildet ist, die an eine elektrische Spannungsquelle mit bevorzugt konstanter elektrischer Spannung sowie an die mindestens eine elektronische Auswerte- und Steuereinheit angeschlossen sind und mit der mindestens einen elektronischen Auswerte- und Steuereinheit der elektrische Stromfluss zwischen den mindestens zwei Elektroden (12) gemessen wird, angeordnet ist und mit der mindestens einen elektronischen Auswerte- und Steuereinheit eine für den Stoffwechsel der Probe (6) charakteristische Messgröße erfassbar und auswertbar ist.

11. Sensorsystem nach einem der Ansprüche 1 bis 10, **dadurch gekennzeichnet, dass** an dem Gehäuse (7) mindestens ein Messgerät angeschlossen oder darin angeordnet ist, mit dem der Anteil an in der Atmosphäre innerhalb des Gehäuses (7) enthaltenem Sauerstoff und/oder enthaltenem Kohlendioxid bestimmbar ist.

12. Sensorsystem nach einem der Ansprüche 1 bis 11, **dadurch gekennzeichnet, dass** die mindestens zwei Sensoren in einem gemeinsamen Gehäuse (7) angeordnet und insbesondere dabei die Thermoketten (4.1, 4.2, 4.3) der zwei Sensoren elektrisch in Reihe geschaltet sind.

13. Verfahren zur Erfassung thermodynamischer Kenngrößen einer Probe (6) mit einem Sensor gemäß einem der Ansprüche 1 bis 9 oder einem Sensorsystem nach einem der Ansprüche 10 bis 12, bei dem
in einem ersten Schritt mittels des mindestens einen Heizelements (3) eine Kalibrierung durchgeführt wird, bei der die an den Enden der mindestens einen Thermokette (4.1, 4.2, 4.3) anliegende elektrische Spannung in Abhängigkeit der Heizleistung des mindestens einen Heizelements (3, 3.1) erfasst wird und
in einem zweiten Schritt anhand der in dem ersten Schritt durchgeführten Kalibrierung mindestens ein Temperaturgradient, der sich in der freitragenden Membran (2) aufgrund eines in der Probe (6) ablaufenden thermodynamischen Prozesses und einer damit verbundenen Wärmeabgabe- oder Wärmeaufnahme ausgebildet hat, erfasst wird.

14. Verfahren nach Anspruch 13, **dadurch gekennzeichnet, dass** die Probe (6) zeitlich vor dem zweiten Schritt und/oder vor dem ersten Schritt in dem Gehäuse (7) und/oder an oder auf der ersten Oberfläche der freitragenden Membran (2) angeordnet wird und/oder während des zweiten Schritts keine Erwärmung der Probe (6) mittels des mindestens einen Heizelements (3) erfolgt und/oder die Temperatur des Substrats (2) während des ersten und/oder des zweiten Schritts konstant gehalten wird.

15. Verfahren nach einem der Ansprüche 14 bis 15, **dadurch gekennzeichnet, dass** ein Temperaturgradient mit mindestens einem Puls, bei dem die Temperatur im Bereich der Probe (6) innerhalb eines vorgegebenen Zeitintervalls um eine vorgebbare Temperatur erhöht wird, bevorzugt innerhalb von 5 s im Bereich 0,05 K bis 5 K erhöht, und anschließend die Verringerung der Temperatur im Bereich der Probe (6) zeitaufgelöst erfasst und der zeitaufgelöst erfasste Temperaturabfallverlauf dieses Pulses mit vorab zeitaufgelöst erfassten Temperaturabfallverläufen an vergleichbaren Proben (6) mit bekannter Stoffwechselfunktionalität mittels der mindestens einen elektronischen Auswerte- und Steuereinheit verglichen wird.

## Claims

1. A sensor for detecting thermodynamic parameters of a sample (6), comprising
a support structure (1, 1.1, 2) with at least one substrate (1) and at least one self-supporting membrane (2), wherein edge regions of the at least one self-supporting membrane (2) are arranged on the at least one substrate (1),
at least one heating element (3), which is formed having at least one electrical conductor track arranged on a first portion of a first surface of the self-supporting membrane (2),
at least one thermopile (4.1, 4.2, 4.3), which is formed with a plurality of thermocouples (4.1, 4.2) connected to one another electrically in series, and at least partly encloses the at least one electrical conductor track of the at least one heating element (3) and/or at least the at least one heating element (3) on the first surface of the self-supporting membrane (2),
at least one electronic evaluation and control unit, which is electrically connected to the thermopile (4.1, 4.2, 4.3) and is designed to detect at least one temperature gradient on the basis of a calibration carried out via the at least one heating element (3) and a sample (6) arranged at or on the self-supporting membrane (2) which has formed in the self-supporting membrane (2) due to a thermodynamic process taking place in the sample (6) and an emission of heat or an absorption of heat associated therewith.

2. A sensor according to the preceding claim, **characterised in that** during the detection of the at least one temperature gradient via the electronic evaluation and control unit, the sample (6) is arranged at or on a second surface of the self-supporting membrane (2), whose second surface is placed opposite the first portion of the first surface and/or on a second surface of the self-supporting membrane (2) facing away from the at least one electrical conductor track of the at least one heating element (3), and is arranged there to be directly opposite the at least one electrical conductor track of the at least one heating element (3).

3. A sensor according to any of the preceding claims, **characterised in that** on the at least one electrical conductor track of the at least one heating element (3) or on a layer in which the at least one electrical conductor track of the at least one heating element (3) and/or the at least one heating element (3) is/are integrated, the surface of the heat-conducting layer (5) facing the at least one electrical conductor track of the at least one heating element (3) and/or facing the at least one heating element (3) being arranged such as to correspond to the first portion of the first surface of the self-supporting membrane (2) and/or the heat-conducting layer (5) being formed of a metal, in particular of gold.

4. A sensor according to one of the preceding claims, **characterised in that**, starting from the outer edge of the self-supporting membrane (2), the electrical conductors of the thermocouples (4.1, 4.2) are led on the first surface of the self-supporting membrane (2) up to the outer edge of the first portion of the first surface of the self-supporting membrane (2).

5. A sensor according to one of the preceding claims, **characterised in that** a plurality of first connection points (4.4) and a plurality of second connection points (4.5) of the thermocouples (4.1, 4.2) are formed alternately along the at least one thermopile (4.1, 4.2, 4.3), wherein the first connection points (4.4) and the second connection points (4.5) each electrically connect two electrical conductors (4.1, 4.2) formed with different materials to one another and the first connection points (4.4) are arranged on the outer edge of the first portion of the first surface and/or the second, connection points (4.5) are arranged at a distance from the outer edge of the first portion of the first surface and/or arranged on the substrate (1) of the support structure (1, 1.1, 2).

6. A sensor according to one of the preceding claims, **characterised in that** the at least one heating element (3) has at least two electrical contact elements (3.1) which are electrically connected to the outer ends of the at least one electrical conductor track of the at least one heating element (3) and/or are arranged on the substrate (1) and/or the at least one thermopile (4, 4.1, 4.2) comprises two further electrical contact elements (4.3), which are each electrically connected to an outer end of the thermopile (4.1, 4.2, 4.3) and/or arranged on the substrate (1).

7. A sensor according to one of the preceding claims, **characterised in that** the support structure (1, 1.1, 2), the at least one heating element (3), the at least one thermopile (4.1, 4.2, 4.3) are arranged in a housing (7), wherein the housing (7) is formed with copper and/or the housing (7) comprises thermally conductive supporting or retaining structures (7.1) and/or the housing (7) is connected to the support structure (1, 1.2, 2) via thermally conductive supporting or retaining structures (7.1) and/or a heat-conducting paste and/or electrical contacts (8) are routed from the support structure (1, 1.1, 2) through an outer frame (7.2) of the housing (7) into a region located outside the housing (7) and/or the housing (7) is arranged in a thermostatic chamber.

8. A sensor according to one of the preceding claims, **characterised in that** the first surface of the self-supporting membrane (2) is at least 10 mm² in size and/or the self-supporting membrane (2) is at most 1 µm thick and/or a distance between the second surface of the self-supporting membrane (2), facing away from the at least one heating element (3), and the housing (7) and/or an outer frame (7.2) of the housing (7) is at least 5 mm.

9. A sensor according to one of the preceding claims, **characterised in that** the substrate (1) is formed with silicon and/or the self-supporting membrane (2) is formed with silicon nitride and/or the p-type thermal arms (4.1) of the thermocouples (4.1, 4.2) are formed with antimony and/or the n-type thermal arms (4.2) of the thermocouples (4.1, 4.2) are formed with bismuth.

10. A sensor system according to one of claims 1 to 9, whereby in a surface region, on which the sample (6) is arranged, formed with at least two electrodes (12) arranged at a distance from each other, which are connected to an electrical voltage source with a preferably constant electrical voltage and to the at least one electronic evaluation and control unit and with which at least one electronic evaluation and control unit measures the electric current flow between the at least two electrodes (12), and with which the at least one electronic evaluation and control unit can detect and evaluate a measurement characteristic of the metabolism of the sample (6).

11. Sensor system according to any of claims 1 to 10, **characterised in that** at least one measurement instrument is connected to or arranged in the housing (7), and the proportion of oxygen and/or carbon dioxide contained in the atmosphere inside the housing (7) can be determined using said measurement instrument.

12. A sensor system according to one of claims 1 to 11, **characterised in that** the at least two sensors are arranged in a shared housing (7) and particularly **in that**
the thermopiles (4.1, 4.2, 4.3) of the two sensors are electrically wired in series.

13. A method for detecting thermodynamic parameters of a sample (6) using a sensor according to any of claims 1 to 9 or a sensor system according to any of claims 10 to 12, in which
in a first step, a calibration is carried out via the at least one heating element (3), in which the electrical voltage present at the ends of the at least one thermopile (4.1, 4.2, 4.3) is detected as a function of the heating output of the at least one heating element (3, 3.1) and
in a second step, on the basis of the calibration carried out in the first step, at least one temperature gradient is detected that has formed in the self-supporting membrane (2) due to a thermodynamic process taking place in the sample (6) and an associated release of heat or absorption of heat.

14. A method according to claim 13, **characterised in in that** the sample (6) is arranged in the housing (7) and/or on or at the first surface of the self-supporting membrane (2) chronologically before the second step and/or before the first step and/or the sample (6) is not heated via the at least one heating element (3) during the second step and/or the temperature of the substrate (2) is kept constant during the first and/or second step.

15. A method according to any one of claims 14 to 15, **characterised in that** preferably a temperature gradient is increased in the range of 0.05 k to 5 K within 5 s by at least one pulse in which the temperature in the region of the sample (6) is increased by a predeterminable temperature within a predetermined time period, and then the drop in the temperature in the region of the sample (6) is detected in a time-resolved manner, and the temperature drop curve of this pulse, detected in a time-resolved manner, is compared with temperature drop curves via the at least one electronic evaluation and control unit, detected beforehand in a time-resolved manner on similar samples (6) having a known metabolic functionality.

## Revendications

1. Capteur permettant de détecter des caractéristiques thermodynamiques d'un échantillon (6), comprenant
une structure de support (1, 1.1, 2) qui présente au moins un substrat (1) et au moins une membrane en porte-à-faux (2), dans lequel des régions périphériques de la au moins une membrane en porte-à-faux (2) sont agencées sur le au moins un substrat (1),
au moins un élément chauffant (3) constitué d'au moins une piste conductrice électrique agencée sur une première sous-partie d'une première surface de la membrane en porte-à-faux (2),
au moins une chaîne thermique (4.1, 4.2, 4.3) qui est constituée de plusieurs thermocouples (4.1, 4.2) reliés électriquement en série et qui entoure au moins partiellement au moins une piste conductrice électrique du au moins un élément chauffant (3) et/ou du au moins un élément chauffant (3) sur la première surface de la membrane en porte-à-faux (2),
au moins une unité électronique d'évaluation et de commande, reliée électriquement à la chaîne thermique (4.1, 4.2, 4.3) et conçue pour détecter au moins un gradient de température qui s'est formé dans la membrane en porte-à-faux (2) en raison d'un processus thermodynamique se déroulant dans l'échantillon (6) et d'une émission ou d'une absorption de chaleur associée, à l'aide d'un étalonnage, mis en œuvre au moyen du au moins un élément chauffant (3), et d'un échantillon (6) agencé au niveau de ou sur la membrane en porte-à-faux (2).

2. Capteur selon la revendication précédente, **caractérisé en ce que** pendant la détection du au moins un gradient de température au moyen de l'unité électronique d'évaluation et de commande, l'échantillon (6) est agencé au niveau de ou sur une deuxième surface, qui fait face à la première sous-région de la première surface, de la membrane en porte-à-faux (2) et/ou sur une deuxième surface, qui se détourne de la au moins une piste conductrice électrique du au moins un élément chauffant (3), de la membrane en porte-à-faux (2), et, à cet endroit, fait directement face à la au moins une piste conductrice électrique du au moins un élément chauffant (3).

3. Capteur selon l'une quelconque des revendications précédentes, **caractérisé en ce qu'**une couche thermoconductrice (5) est agencée sur la au moins une piste conductrice électrique du au moins un élément chauffant (3) ou sur une couche dans laquelle est/sont intégré(s) la au moins une piste conductrice électrique du au moins un élément chauffant (3) et/ou le au moins un élément chauffant (3), dans lequel la surface, tournée vers la au moins une piste conductrice électrique du au moins un élément chauffant (3) et/ou vers le au moins un élément chauffant (3), de la couche thermoconductrice (5) est agencée de manière à correspondre à la première sous-région de la première surface de la membrane en porte-à-faux (2) et/ou la couche thermoconductrice (5) est constituée d'un métal, en particulier d'or.

4. Capteur selon l'une quelconque des revendications précédentes, **caractérisé en ce que** les conducteurs électriques des thermocouples (4.1, 4.2) sont guidés sur la première surface de la membrane en porte-à-faux (2) à partir du bord extérieur de la membrane en porte-à-faux (2) jusqu'au bord extérieur de la première sous-région de la première surface de la membrane en porte-à-faux (2).

5. Capteur selon l'une quelconque des revendications précédentes, **caractérisé en ce que**, le long de la au moins une chaîne thermique (4.1, 4.2, 4.3), plusieurs premiers points de connexion (4.4) et plusieurs deuxièmes points de connexion (4.5) des thermocouples (4.1, 4.2) sont réalisés de manière alternée, dans lequel les premiers points de connexion (4.4) et les deuxièmes points de connexion (4.5) relie électriquement l'un à l'autre respectivement deux conducteurs électriques (4.1, 4.2) constitués de matériaux différents, et les premiers points de connexion (4.4) sont agencés sur le bord extérieur de la première sous-région de la première surface et/ou les deuxièmes points de connexion (4.5) se trouvent à distance du bord extérieur de la première sous-région de la première surface et/ou sont agencés sur le substrat (1) de la structure de support (1, 1.1, 2).

6. Capteur selon l'une quelconque des revendications précédentes, **caractérisé en ce que** le au moins un élément chauffant (3) présente au moins deux éléments de contact électrique (3.1) qui sont reliés électriquement aux extrémités extérieures de la au moins une piste conductrice électrique du au moins un élément chauffant (3) et/ou sont agencés sur le substrat (1), et/ou la au moins une chaîne thermique (4, 4.1, 4.2) présente au moins deux éléments de contact électrique (4.3) supplémentaires qui sont respectivement reliés électriquement à une extrémité extérieure de la chaîne thermique (4.1, 4.2, 4.3) et/ou sont agencés sur le substrat (1).

7. Capteur selon l'une quelconque des revendications précédentes, **caractérisé en ce que** la structure de support (1, 1.1, 2), le au moins un élément chauffant (3), et la au moins une chaîne thermique (4.1, 4.2, 4.3) sont agencés dans un boîtier (7), dans lequel le boîtier (7) est constitué de cuivre et/ou le boîtier (7) présente des structures de support ou de retenue (7.1) thermiquement conductrices et/ou le boîtier (7) est relié à la structure de support (1, 1.1, 2) par l'intermédiaire de structures de support ou de retenue (7.1) thermiquement conductrices et/ou par l'intermédiaire d'une pâte conductrice de chaleur, et/ou des contacts électriques (8) sont guidés depuis la structure de support (1, 1.1, 2) jusqu'à une région située à l'extérieur du boîtier (7) en passant par un cadre extérieur (7.2) du boîtier (7), et/ou le boîtier (7) est agencé dans une chambre thermostatique.

8. Capteur selon l'une quelconque des revendications précédentes, **caractérisé en ce que** la première surface de la membrane en porte-à-faux (2) représente au moins 10 mm² et/ou l'épaisseur de la membrane en porte-à-faux (2) est au maximum de 1 µm et/ou une distance comprise entre la deuxième surface, détournée du au moins un élément chauffant (3), de la membrane en porte-à-faux (2) et le boîtier (7) et/ou un cadre extérieur (7.2) du boîtier (7) est d'au moins 5 mm.

9. Capteur selon l'une quelconque des revendications précédentes, **caractérisé en ce que** le substrat (1) est constitué de silicium et/ou la membrane en porte-à-faux (2) est constituée de nitrure de silicium et/ou des branches thermiques (4.1) conductrices de type p des thermocouples (4.1, 4.2) sont constituées d'antimoine et/ou des branches thermiques (4.2) conductrices de type n des thermocouples (4.1, 4.2) sont constituées de bismuth.

10. Système de détection selon l'une quelconque des revendications 1 à 9, dans lequel un biocapteur, constitué d'au moins deux électrodes (12) agencées à distance l'une de l'autre et raccordées à une source de tension électrique qui présente une tension électrique de manière préférée constante et à la au moins une unité électronique d'évaluation et de commande, est agencé dans une région de surface sur laquelle est agencé l'échantillon (6) et le flux de courant électrique entre les au moins deux électrodes (12) est mesuré avec la au moins une unité électronique d'évaluation et de commande, et une grandeur de mesure caractéristique du métabolisme de l'échantillon (6) peut être détectée et évaluée par la au moins une unité électronique d'évaluation et de commande.

11. Système de détection selon l'une quelconque des revendications 1 à 10, **caractérisé en ce qu'**au moins un appareil de mesure, avec lequel la proportion d'oxygène et/ou de dioxyde de carbone contenu dans l'atmosphère à l'intérieur du boîtier (7) peut être déterminée, est raccordé au niveau du boîtier (7) ou est agencé dans celui-ci.

12. Système de détection selon l'une quelconque des revendications 1 à 11, **caractérisé en ce que** les au moins deux capteurs sont agencés dans un boîtier (7) commun et
les chaînes thermiques (4.1, 4.2, 4.3) des deux capteurs sont en particulier commutées électriquement en série.

13. Procédé de détection de caractéristiques thermodynamiques d'un échantillon (6) à l'aide d'un capteur selon l'une quelconque des revendications 1 à 9 ou d'un système de détection selon l'une quelconque des revendications 10 à 12, dans lequel
lors d'une première étape, un étalonnage est mis en œuvre au moyen du au moins un élément chauffant (3), la tension électrique appliquée aux extrémités de la au moins une chaîne thermique (4.1, 4.2, 4.3) étant détectée en fonction de la puissance de chauffage du au moins un élément chauffant (3, 3.1) et
dans un deuxième temps, au moins un gradient de température, qui s'est formé dans la membrane en porte-à-faux (2) en raison d'un processus thermodynamique se déroulant dans l'échantillon (6) et d'une émission ou d'une absorption de chaleur associée, est détecté à l'aide de l'étalonnage mis en œuvre à la première étape.

14. Procédé selon la revendication 13, **caractérisé en ce que** l'échantillon (6) est agencé dans le boîtier (7) et/ou au niveau de ou sur la première surface de la membrane en porte-à-faux (2) chronologiquement avant la deuxième étape et/ou avant la première étape et/ou aucun chauffage de l'échantillon (6) au moyen du au moins un élément chauffant (3) n'intervient pendant la deuxième étape et/ou la température du substrat (2) est maintenue constante pendant la première et/ou la deuxième étape.

15. Procédé selon l'une quelconque des revendications 14 à 15, **caractérisé en ce qu'**un gradient de température est augmenté grâce à au moins une impulsion, la température dans la région de l'échantillon (6) étant augmentée dans un intervalle de temps prédéterminé à hauteur d'une température prédéfinissable, de manière préférée en moins de 5 s dans la plage comprise entre 0,05 K et 5 K, puis la réduction de la température dans la région de l'échantillon (6) est détectée de manière résolue dans le temps et la courbe de chute de température détectée de manière résolue dans le temps de ladite impulsion est comparée au moyen de la au moins une unité électronique d'évaluation et de commande à des courbes de chute de température détectées de manière résolue dans le temps sur des échantillons (6) comparables présentant une fonctionnalité métabolique connue.
